# EUROPÄISCHE PATENTANMELDUNG

(11) **EP 3 457 246 A1**
(43) Veröffentlichungstag der Anmeldung: **20.03.2019**
(21) Anmeldenummer: 18188084.0
(22) Anmeldetag: 08.08.2018
(51) Int. Cl.: G05D 1/02, G05D 1/00, B60W 30/095, B60W 40/09, B60W 50/08, B60W 50/14

(54) **FAHRASSISTENZVORRICHTUNG EINGERICHTET ZUR TEILAUTONOMEN UND VOLLAUTONOMEN FÜHRUNG EINES KRAFTFAHRZEUGS, VERFAHREN UND KRAFTFAHRZEUG**

(30) Priorität: 05.09.2017 DE 102017215592
(71) Anmelder: VOLKSWAGEN AKTIENGESELLSCHAFT, 38440 Wolfsburg (DE)
(72) Erfinder: Schacher, Samuel, 10629 Berlin (DE); Kallmeyer, Felix, 38448 Wolfsburg (DE); Hoedt, Jens, 30161 Hannover (DE)

(57) **Zusammenfassung**

Die Erfindung betrifft eine Fahrassistenzvorrichtung (5), eingerichtet zur teilautonomen und vollautonomen Führung eines Kraftfahrzeugs (2), wobei die Fahrassistenzvorrichtung (5) dazu eingerichtet ist, mögliche Rückführtrajektorien (1) zum jeweiligen Rückführen eines Kraftfahrzeugs (2) von einer Anfangsbedingung (4), welche von einer vorgegebenen Solltrajektorie (3) abweicht, auf die Solltrajektorie (3) zu berechnen, wobei jede Rückführtrajektorie (1) ein jeweiliges vorbestimmtes Fahrdynamikprofil (6) erfüllt, welches jeweils einen zulässigen Wertebereich einer Gesamtbeschleunigung (a) vorgibt und welchem ein jeweiliger Autonomiegrad (7) zugeordnet ist. Die Fahrassistenzvorrichtung (5) ist dazu eingerichtet, die Rückführtrajektorien (1), welche ein Auswahlkriterium mit zumindest einer Randbedingung erfüllen, jeweils als geeignete Rückführtrajektorien (1*) auszuwählen und aus den geeigneten Rückführtrajektorien (1*) diejenige, deren Fahrdynamikprofil (6) einen minimalen Autonomiegrad (7) aufweist, als geeignete Rückführtrajektorie (1**) zu ermitteln und in Abhängigkeit von dem Autonomiegrad (7) des Fahrdynamikprofils (6) der ausgewählten geeigneten Rückführtrajektorie (1**) in die Führung des Kraftfahrzeugs (2) einzugreifen.

## Beschreibung

Die Erfindung betrifft eine Fahrassistenzvorrichtung eingerichtet zur teilautonomen und vollautonomen Führung eines Kraftfahrzeugs sowie ein Verfahren und ein zugehöriges Kraftfahrzeug.

Zur Optimierung der Fahrdynamik und der Sicherheit kann ein Kraftfahrzeug über eine Fahrassistenzvorrichtung verfügen, welche in die Führung oder Steuerung des Kraftfahrzeugs eingreifen kann. In der Regel erfolgt die Führung des Kraftfahrzeugs durch einen Fahrer und das Eingreifen der Fahrassistenzvorrichtung in die Führung erfolgt nur unter vorbestimmten Bedingungen, wie einer vorbestimmten kritischen Fahrdynamik. Beispiele für solche Fahrassistenzvorrichtungen sind beispielsweise die elektronische Stabilitätskontrolle, welche die Längsführung des Kraftfahrzeugs beeinflusst, und aktive Spurhalteassistenten, welche in die Querführung des Kraftfahrzeugs eingreifen, um dieses auf einer Fahrspur zu halten. Fahrassistenzvorrichtungen sind im Allgemeinen dazu eingerichtet, erst oder nur in vorbestimmten kritischen Situationen einzugreifen. Vorteilhaft wäre ein vorausschauendes Eingreifen einer Fahrassistenzvorrichtung, bevor das Kraftfahrzeug in einen fahrdynamisch kritischen Bereich gerät unter Berücksichtigung der individuellen Fahrverhaltens des Fahrers, um dessen Fahrkönnen zu berücksichtigen.

In der Dissertation "Ein neues Konzept für die Trajektoriengenerierung und -stabilisierung in zeitkritischen Verkehrsszenarien". Moritz Werling, Karlsruher Institut für Technologie, 2010; wird ein Verfahren zur Berechnung von Trajektorien beschrieben. Das Verfahren umfasst jedoch keine Möglichkeit, Trajektorien an Referenzen eines Fahrers anzupassen

In der Dissertation "Shared vehicle control using safe driving envelopes for obstacle avoidance and stability". Stephen Erlien, Stanford University, 2015; wird ein System beschrieben, welches in eine Führung eines Kraftfahrzeugs eingreift.

Die US 2013/131947 A1 beschreibt ein Verfahren und eine Vorrichtung zur Fahrassistenz. Die beschriebene Vorrichtung ist dazu eingerichtet, einen Verlauf einer Kurve, welche in Fahrtrichtung eines Kraftfahrzeugs liegt, zu erfassen und auf Grundlage des Kurvenverlaufs vorausschauend in die Längsführung des Kraftfahrzeugs einzugreifen.

Es ist eine Aufgabe der Erfindung, eine Fahrassistenzvorrichtung bereitzustellen, welche ein vorausschauendes Eingreifen in die Führung eines Kraftfahrzeugs ermöglicht.

Erfindungsgemäß wird eine Fahrassistenzvorrichtung bereitgestellt, welche zur teilautonomen und vollautonomen Führung eines Kraftfahrzeugs eingerichtet ist. Die Fahrassistenzvorrichtung ist dazu eingerichtet, mögliche Rückführtrajektorien zum jeweiligen Rückführen eines Kraftfahrzeugs von einer Anfangsbedingung, welche von einer vorgegebenen Solltrajektorie abweicht, auf die Solltrajektorie zu berechnen. Dabei erfüllt jede Rückführtrajektorie ein jeweiliges vorbestimmtes Fahrdynamikprofil, welches jeweils einen zulässigen Wertebereich einer Gesamtbeschleunigung (umfassend eine Längsbeschleunigungskomponente und eine Querbeschleunigungskomponente) vorgibt und welchem ein jeweiliger Autonomiegrad zugeordnet ist. Die Fahrassistenzvorrichtung ist dazu eingerichtet, daraus solche Rückführtrajektorien, welche ein Auswahlkriterium mit zumindest einer vorbestimmten Randbedingung erfüllen, jeweils als geeignete Rückführtrajektorie zu ermitteln und aus den geeigneten Rückführtrajektorien diejenige Rückführtrajektorie auszuwählen, deren Fahrdynamikprofil den minimalen Autonomiegrad aufweist, und dann in Abhängigkeit von dem Autonomiegrad dieses Fahrdynamikprofils der ausgewählten geeigneten Rückführtrajektorie zur Umsetzung dieser Rückführtrajektorie in die Führung des Kraftfahrzeugs einzugreifen. Mit anderen Worten wird eine Fahrassistenzvorrichtung bereitgestellt, welche ein Kraftfahrzeug wahlweise alleine oder kooperativ mit einem Fahrer des Kraftfahrzeugs führen kann. Die Fahrassistenzvorrichtung ist dazu eingerichtet, Rückführtrajektorien für ein Kraftfahrzeug zu berechnen, welches sich außerhalb einer Solltrajektorie an einer Anfangsbedingung befindet und auf die Solltrajektorie zurückgeführt werden soll. Jeder der Rückführtrajektorien ist ein vorbestimmtes Fahrdynamikprofil zugeordnet, welches Werte einer Gesamtbeschleunigung definiert, die bei einem Verfolgen der Rückführtrajektorie auftreten dürfen. Eine gegebene Rückführtrajektorie erfüllt dabei nicht immer jedes Fahrdynamikprofil. Das zugeordnete Fahrdynamikprofil kann z.B. aus mehreren vordefinierten Fahrdynamikprofilen entnommen sein. Es wird dann ein solches Fahrdynamikprofil zugeordnet, welches durch die Rückführtrajektorie auch tatsächlich erfüllt wird. Jedem Fahrdynamikprofil ist auch ein jeweiliger Autonomiegrad zugeordnet, welcher definiert, in welchem Ausmaß die Fahrassistenzvorrichtung bei einem Verfolgen der zugehörigen Rückführtrajektorie in die Führung des Kraftfahrzeugs eingreift. Das Verfahren geht also aus von mehreren möglichen Rückführtrajektorien, denen jeweils bereits ein Fahrdynamikprofil (zusammen mit einem zugehörigen Autonomiegrad) zugeordnet ist.

Die Fahrassistenzvorrichtung ermittelt nun unter diesen berechneten möglichen Rückführtrajektorien all diejenigen Rückführtrajektorien, welche aufgrund einer Erfüllung des besagten Auswahlkriteriums in der aktuellen Ausgangssituation geeignet sind, und wählt unter diesen geeigneten Rückführtrajektorien wiederum diejenige eine Rückführtrajektorie aus, deren Fahrdynamikprofil den minimalen Autonomiegrad aufweist. Die Fahrassistenzvorrichtung ist dazu eingerichtet, die ausgewählte geeignete Rückführtrajektorie umzusetzen, wobei sie gemäß dem Autonomiegrad des zugehörigen Fahrdynamikprofils dieser Rückführtrajektorie in die Führung des Kraftfahrzeugs eingreift. Das verwendete Fahrdynamikprofil gibt dabei einen zulässigen Wertebereich der Gesamtbeschleunigung und optional eine maximale Geschwindigkeit vor. Eine Fahrassistenzvorrichtung kann dabei eine Steuereinheit sein, welche einen Mikrocontroller und/oder einen Mikroprozessor umfasst und dazu eingerichtet ist, Rückführtrajektorien zu berechnen. Diese Rückführtrajektorien können das Kraftfahrzeug von der Anfangsbedingung, welche eine aktuelle geographische Position, eine aktuelle Geschwindigkeit und/oder eine aktuelle Beschleunigung des Kraftfahrzeugs beschreiben kann, auf die vorgegebene Solltrajektorie zurückführen, sodass das Kraftfahrzeug am Ende der Rückführtrajektorie einer Bedingung der vorgegebenen Solltrajektorie genügt. Die vorgegebene Solltrajektorie kann eine Bahnkurve sein, welche einen zeitlichen Verlauf einer geographischen Position, einer Geschwindigkeit und einer Beschleunigung eines Kraftfahrzeugs definiert. Diese kann durch ein Berechnungsverfahren nach dem Stand der Technik berechnet worden sein. Eine Trajektorie ergibt allgemein einen Wertebereich, welcher Werte einer Gesamtbeschleunigung umfasst, die bei einem befolgen der jeweiligen Rückführtrajektorie auftreten. Die Gesamtbeschleunigung umfasst eine Längskomponente, welche die Beschleunigung in Längsrichtung des Kraftfahrzeugs betrifft, und eine Querbeschleunigungskomponente, welche die Beschleunigung quer zur Längsrichtung des Kraftfahrzeugs betrifft.

In der Fahrassistenzvorrichtung können z.B. in der besagten Weise mehrere vorbestimmte Fahrdynamikprofile gespeichert sein, welche jeweils einen zulässigen Wertebereich der Gesamtbeschleunigung definieren können. Wird ein Wertebereich einer Rückführtrajektorie vollständig durch den zulässigen Wertebereich eines Fahrdynamikprofils abgedeckt, so erfüllt die Rückführtrajektorie das jeweilige Fahrdynamikprofil. Es kann sein, dass eine Rückführtrajektorie auch mehr als ein Fahrdynamikprofil erfüllt. Jedem Fahrdynamikprofil ist aber zudem ein Autonomiegrad zugeordnet, welcher angibt, in welchem Umfang die Fahrassistenzvorrichtung in die Führung des Kraftfahrzeugs eingreift, wenn der Rückführtrajektorie gefolgt wird, welche dem Fahrdynamikprofil zugeordnet ist. Erfüllt eine Rückführtrajektorie mehrere der vorgegebenen Fahrdynamikprofile, so wird ihr dasjenige dieser Fahrdynamikprofile zugeordnet, welches den geringsten Autonomiegrad aufweist. Nun kann man also von mehreren Rückführtrajektorien ausgehen, denen jeweils genau ein Fahrdynamikprofil zugeordnet ist.

Es kann dann durch das zusätzliche, die aktuelle Ausgangssituation betreffende Auswahlkriterium zumindest eine Randbedingungen vorgegeben sein, welche die letztendlich verwendete Rückführtrajektorie erfüllen muss, damit sie auch bei der vorliegenden Anfangsbedingung für eine Rückführung des Kraftfahrzeugs als geeignet angesehen wird.

Aus den geeigneten Rückführtrajektorien kann die Fahrassistenzvorrichtung eine ausgewählte geeignete Rückführtrajektorie ermitteln, deren zugehörigem Fahrdynamikprofil ein minimaler Eingriff der Fahrassistenzvorrichtungen in die Führung des Kraftfahrzeugs unter allen der geeigneten Rückführtrajektorien zugeordnet ist. Entsprechend dem Autonomiegrad des Fahrdynamikprofils der ausgewählten geeigneten Rückführtrajektorie kann die Fahrassistenzvorrichtung in die Führung des Kraftfahrzeugs eingreifen. So kann dem Fahrdynamikprofil der ermittelten Rückführtrajektorie ein Eingriff in eine Längsführung des Kraftfahrzeugs zugeordnet sein, während die Querführung bei dem Fahrer verbleibt. Die Fahrassistenzvorrichtung kann beispielsweise einen Mikrocontroller und/oder einen Mikroprozessor umfassen.

Durch die Erfindung ergibt sich der Vorteil, dass ein Eingreifen in Abhängigkeit von Fahrdynamikprofilen ermöglicht wird, wobei das Eingreifen der Fahrassistenzvorrichtung in die Fahrzeugführung minimal gehalten wird.

Eine Weiterbildung sieht vor, dass die Fahrassistenzvorrichtung dazu eingerichtet ist, ein Eingreifen in Abhängigkeit von dem Autonomiegrad der ausgewählten geeigneten Rückführtrajektorie derart durchzuführen, dass die Führung des Kraftfahrzeugs entweder nur durch einen Fahrer oder teilautonom durch den Fahrer und die Fahrassistenzvorrichtung oder autonom durch die Fahrassistenzvorrichtung erfolgt. Mit anderen Worten ist die Fahrassistenzvorrichtung dazu eingerichtet, in die Führung des Kraftfahrzeugs einzugreifen, wobei das Ausmaß des Eingriffs durch den Autonomiegrad des Fahrdynamikprofils der ausgewählten geeigneten Rückführtrajektorie festgelegt ist. Dabei ist es vorgesehen, dass die Führung allein durch einen Fahrer des Kraftfahrzeugs erfolgt oder, dass die Führung durch einen Fahrer des Kraftfahrzeugs erfolgt, wobei die Fahrassistenzvorrichtung in die Führung eingreift oder das Kraftfahrzeug alleine durch die Fahrassistenzvorrichtung gesteuert wird. Beispielsweise kann es sein, dass die Fahrassistenzvorrichtung bei einem bestimmten Autonomiegrad eines Fahrdynamikprofils in die Längsführung des Kraftfahrzeugs, wozu beispielsweise ein Bremsen und/oder beschleunigen gehören kann, eingreift, die Querführung, wozu beispielsweise ein Lenken gehören kann, durch den Fahrer des Kraftfahrzeugs erfolgt. Dadurch ergibt sich der Vorteil, dass ein Ausmaß des Eingreifens der Fahrassistenzvorrichtung von der Fahrdynamik der ausgewählten geeigneten Rückführtrajektorie abhängig gemacht werden kann.

Eine Weiterbildung sieht vor, dass die Fahrassistenzvorrichtung dazu eingerichtet ist, optische und/oder haptische und/oder akustische Warnsignale betreffend eine Querführung und/oder Längsführung gemäß der ausgewählten geeigneten Rückführtrajektorie auszugeben. Mit anderen Worten ist die Fahrassistenzvorrichtung dazu eingerichtet, optische und/oder haptische und/oder akustische Warnsignale auszugeben, wobei die Warnsignale abhängig sind von einer Querführung und/oder Längsführung, welche erforderlich ist, um der ausgewählten geeigneten Rückführtrajektorie zu folgen. So kann es beispielsweise sein, dass auf der Frontscheibe ein durch den Fahrer einzuschlagender Winkel des Lenkrads angezeigt wird, welcher erforderlich ist, um der ausgewählten geeigneten Rückführtrajektorie zu folgen. Dadurch ergibt sich der Vorteil, dass es einem Fahrer ermöglicht wird, einer ausgewählten geeigneten Rückführtrajektorie ohne Eingriffe in die Fahrzeugführung durch die Fahrassistenzvorrichtung zu folgen.

Eine Weiterbildung sieht vor, dass das jeweilige Fahrdynamikprofil eine maximale Längsgeschwindigkeit umfasst. Mit anderen Worten definiert ein jeweiliges Fahrdynamikprofil eine zulässige Höchstgeschwindigkeit, welche ein Kraftfahrzeug bei einem Befahren einer Rückführtrajektorie erreichen darf. So kann es vorgesehen sein, dass ein Fahrdynamikprofil die Geschwindigkeit auf 130 km/h beschränkt. Dadurch ergibt sich der Vorteil, dass gesetzliche Geschwindigkeitsbegrenzungen bei einem Befahren einer Rückführtrajektorie eingehalten werden können.

In einer Weiterbildung ist es vorgesehen, dass ein jeweiliges Fahrdynamikprofil abhängig ist von einer geographischen Position der Solltrajektorie. Mit anderen Worten weisen die zulässigen Werte der Gesamtbeschleunigung und/oder der maximalen Längsgeschwindigkeit eines Fahrdynamikprofils eine örtliche Abhängigkeit auf. So ist es möglich, dass die zulässige Längsgeschwindigkeit innerhalb einer Ortschaft auf 50 km/h beschränkt ist oder die Gesamtbeschleunigung in unebenen Gebieten beschränkter ist als in ebenen Gebieten. Dadurch ergibt sich der Vorteil, dass die Fahrdynamik den örtlichen Gegebenheiten angepasst werden kann.

Eine Weiterbildung der Erfindung sieht vor, dass die zumindest eine vorbestimmte Randbedingung des Auswahlkriteriums eine Einhaltung einer örtlichen Beschränkung umfassen. Mit anderen Worten umfassen die Randbedingungen Kriterien an einen örtlichen Verlauf der geeigneten Rückführtrajektorien. Beispielsweise können die Randbedingungen vorschreiben, dass der Verlauf der geeigneten Rückführtrajektorien innerhalb eines vorbestimmten geographischen Bereichs, wie beispielsweiser eine Fläche einer Straße oder einer Fahrspur liegen muss. Die Randbedingungen können auch die Bedingung umfassen, dass ein vorbestimmter Mindestabstand zu Objekten wie beispielsweise anderen Verkehrsteilnehmern oder Schildern eingehalten werden muss. Dadurch ergibt sich der Vorteil, dass Rückführtrajektorien ausgeschlossen werden, welche aufgrund ihres örtlichen Verlaufs ungeeignet sind.

Eine Weiterbildung sieht vor, dass die Fahrassistenzvorrichtung dazu eingerichtet ist, nach dem Ermitteln der geeigneten Rückführtrajektorien einen Sicherheitswert zu berechnen, welcher ein Verhältnis der Anzahl der möglichen Rückführtrajektorien zu der Anzahl der geeigneten Rückführtrajektorien beschreibt, und aus den geeigneten Rückführtrajektorien, diejenige Rückführtrajektorie, deren Fahrdynamikprofil den minimalen Autonomiegrad aufweist, nur in dem Fall auszuwählen, dass der Sicherheitswert größer ist als ein vorbestimmter Grenzsicherheitswert. Mit anderen Worten ist die Fahrassistenzvorrichtung dazu eingerichtet, ein Verhältnis zwischen der Anzahl der möglichen zu der Anzahl der geeigneten Rückführtrajektorien zu berechnen und zu überprüfen ob der somit berechnete Sicherheitswert größer ist als ein vorbestimmter Grenzsicherheitswert. Wenn der Wert des berechneten Sicherheitswerts größer ist als der vorbestimmte Grenzsicherheitswert, wird eine Rückführtrajektorie aus den geeigneten Rückführtrajektorien ausgewählt, deren Fahrdynamikprofil den minimalen Autonomiegrad aufweist. Dadurch ergibt sich der Vorteil, dass die Führung durch die Fahrassistenzvorrichtung übernommen wird, wenn eine Führung des Kraftfahrzeugs durch einen Fahrer zu riskant wird weil sich der Fahrer verschätzen könnte. So ist es möglich, dass die Fahrassistenzvorrichtung die Rückführtrajektorie eines vorbestimmten Fahrdynamikprofils auswählt, welches beispielsweise eine autonome Führung des Kraftfahrzeugs vorsieht, wenn nur noch 20 % der berechneten Rückführtrajektorien geeignet sind. Allgemein kann der Grenzsicherheitswert in einem Bereich von 1 % bis 80 % liegen. Ansonsten kann die Fahrassistenzvorrichtung die Auswahl der Rückführtrajektorie in Abhängigkeit des Autonomiegrads durchführen. Andernfalls, wenn also der Sicherheitswert nicht größer als der Grenzsicherheitswert ist, kann eine vorbestimmte Rückführtrajektorie ausgewählt werden, deren zugeordnetes Fahrdynamikprofil eine maximale Fahrdynamik und/oder eine maximale Autonomie aufweisen kann.

Eine Weiterbildung der Erfindung sieht vor, dass die zulässige Gesamtbeschleunigung in einem jeweiligen Fahrdynamikprofil mittels eines GG-Profils definiert ist. Mit anderen Worten umfasst ein jeweiliges Fahrdynamikprofil einen Wertebereich betreffend die zulässige Gesamtbeschleunigung, welcher mittels eines GG-Profils definiert ist. Ein GG Profil umfasst eine Achse, welche die Querbeschleunigungskomponente betrifft und eine Achse, welche die Längsbeschleunigungskomponente betrifft. Der Name GG-Profil leitet sich von der Bezeichnung der Erdbeschleunigung G ab. In diesem GG-Profil ist ein abgeschlossener Wertebereich festgelegt, welcher zulässige Werte der Gesamtbeschleunigung umfasst. Ein GG-Profil ist eine übliche Darstellung zur Beschreibung eines Beschleunigungsverhaltens eines Fahrers und/oder eines Kraftfahrzeugs. Dabei kann es sich beispielsweise um einen Kamm'schen Kreis handeln d.h. ein Kreis mit dem Betrag der Gesamtbeschleunigung als Radius. Das GG-Profil kann auch einen mittels Modifikationsparametern definierter Wertebereich sein, welcher einen Kamm'schen Kreis als Grundlage hat. Dadurch ergibt sich der Vorteil, dass eine zulässige Gesamtbeschleunigung, umfassend eine Längsbeschleunigungskomponente und eine Querbeschleunigungskomponente, nach einem Standard zur Beschreibung einer Fahrzeugdynamik festgelegt werden kann.

Die Erfindung umfasst auch ein Verfahren zum Betreiben einer Fahrassistenzvorrichtung nach einem der vorhergehenden Ansprüche.

Die Erfindung umfasst auch ein Kraftfahrzeug mit einer Fahrassistenzvorrichtung nach einem der Ansprüche.

Zu der Erfindung gehören auch Weiterbildungen des erfindungsgemäßen Verfahrens und des erfindungsgemäßen Kraftfahrzeugs, die Merkmale aufweisen, wie sie bereits im Zusammenhang mit den Weiterbildungen der erfindungsgemäßen Fahrassistenzvorrichtung beschrieben worden sind. Aus diesem Grund sind die entsprechenden Weiterbildungen des erfindungsgemäßen Verfahrens und des erfindungsgemäßen Kraftfahrzeug hier nicht noch einmal beschrieben.

Im Folgenden ist ein Ausführungsbeispiel der Erfindung beschrieben. Hierzu veranschaulicht:
- Fig. 1: mögliche erfindungsgemäße Rückführtrajektorien;
- Fig. 2: die Auswahl geeigneter Rückführtrajektorien;
- Fig. 3: die stufenweise Ermittlung der Rückführtrajektorie.

Bei dem im Folgenden erläuterten Ausführungsbeispiel handelt es sich um eine bevorzugte Ausführungsform der Erfindung. Bei dem Ausführungsbeispiel stellen die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

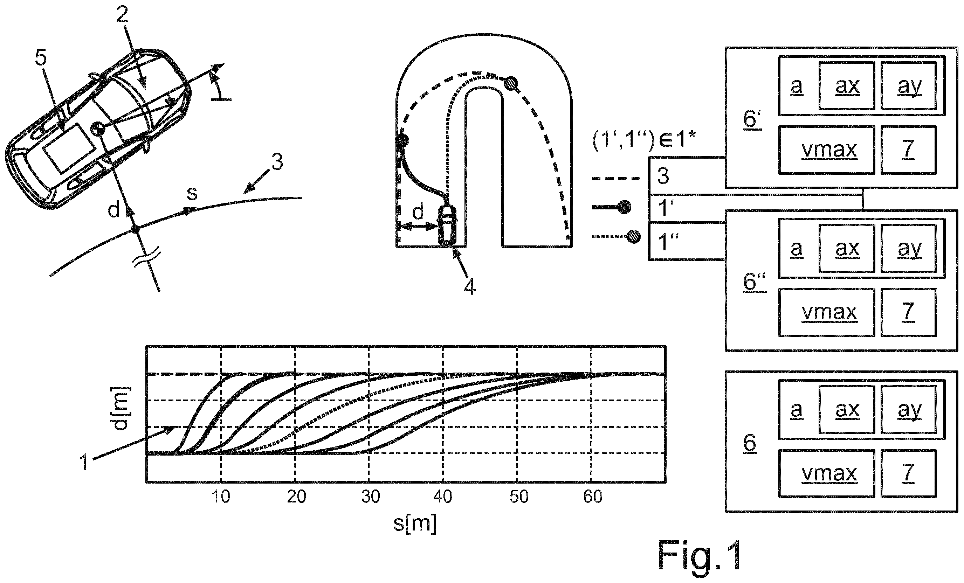

Fig. 1 zeigt mögliche erfindungsgemäße Rückführtrajektorien 1 zum jeweiligen Zurückführen eines Kraftfahrzeugs 2 auf eine vorbestimmte Solltrajektorie 3. Das Kraftfahrzeug 2 kann sich an einer Anfangsbedingung 4 befinden, welche von einer vorgegebenen Solltrajektorie 3 abweicht. Eine Solltrajektorie 3 kann eine vorbestimmte Bahnkurve sein, welche ein Kraftfahrzeug 2 befahren soll. Die Anfangsbedingung 4 kann eine Position des Kraftfahrzeugs 2 und eine Geschwindigkeit umfassen. Eine Fahrassistenzvorrichtung 5 kann gemäß jeweiliger Fahrdynamikprofile 6 jeweilige Rückführtrajektorien 1 berechnen, welche das Kraftfahrzeug 2 auf die Solltrajektorie 3 zurückführen. Ein Fahrdynamikprofil 6 kann beispielsweise mittels eines GG Profils einen zulässigen Wertebereich einer Gesamtbeschleunigung a, umfassend eine Längsbeschleunigungskomponente ax und eine Querbeschleunigungskomponente ay, definieren. Ein Fahrdynamikprofil 6 kann auch eine jeweilige maximale Geschwindigkeit vmax umfassen. Einem jeweiligen Fahrdynamikprofil 6 kann ein Autonomiegrad 7 zugeordnet sein. Der Autonomiegrad 7 beschreibt, in welchem Umfang die Fahrassistenzvorrichtung 5 bei einem Befahren der zugeordneten Rückführtrajektorie 1 in die Führung des Kraftfahrzeugs 2 eingreift. Die Führung kann beispielsweise allein dem Fahrer zugeordnet sein, wobei die Fahrassistenzvorrichtung 5 nicht in die Führung eingreift. Es kann auch eine teilautonome Führung vorgesehen sein, wobei die Führung durch den Fahrer erfolgt und von der Fahrassistenzvorrichtung 5 beeinflusst wird. Es ist beispielsweise möglich, dass eine Querführung des Kraftfahrzeugs durch den Fahrer erfolgt, eine Längsführung jedoch durch die Fahrassistenzvorrichtung 5. Als weitere Möglichkeit kann eine autonome Führung des Kraftfahrzeugs 2 vorgesehen sein. Das bedeutet, dass sowohl die Längsführung als auch die Querführung durch die Fahrassistenzvorrichtung 5 erfolgt und der Fahrer keinen Einfluss auf die Führung hat. Die Figur zeigt ein Diagramm, welches eine Schar von Rückführtrajektorien 1 umfasst. Dabei ist eine Abweichung d zu einer Solltrajektorie 3 gegen die Längsrichtung s der Solltrajektorie 3 aufgetragen. Als Beispiel sind zwei mögliche Rückführtrajektorien 1',1" und der Verlauf der Solltrajektorie 3 in einer Kurve dargestellt. Eine erste Rückführtrajektorie 1' kann auf Grundlage eines Fahrdynamikprofils 6 berechnet worden sein, welches der Fahrdynamik des aktuellen Fahrers entspricht. Dem Fahrdynamikprofil 6 kann dabei ein Autonomiegrad 7 zugeordnet sein, welcher keinen Eingriff in die Führung des Kraftfahrzeugs 2 durch die Fahrassistenzvorrichtung 5 vorsieht. Stattdessen kann es vorgesehen sein, dass die Fahrassistenzvorrichtung 5 den Fahrer mittels akustischer Warnsignale 8 über notwendige Querbeschleunigungen und/oder Längsbeschleunigungen informiert. Eine zweite Rückführtrajektorie 1" kann auf einem Fahrdynamikprofil 6 basieren, welches eine maximale Fahrdynamik des Kraftfahrzeugs 2 beschreibt.

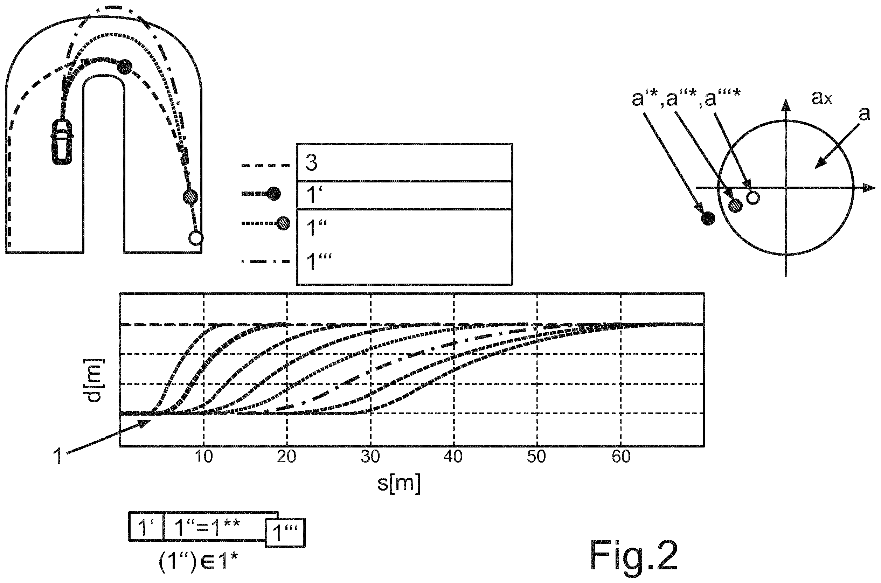

Fig. 2 zeigt die Auswahl geeigneter Rückführtrajektorien 1*. In einem Diagramm ist eine Schar an möglichen Rückführtrajektorien 1 eingetragen. Beispielhaft sind drei Rückführtrajektorien 1', 1", 1'" auf eine Solltrajektorie 3 dargestellt, welche nach jeweiligen Fahrdynamikprofilen 6', 6", 6'" durch die Fahrassistenzvorrichtung 5 berechnet worden sind. Dargestellt ist auch ein GG-Diagramm, welches einen zulässigen Wertebereich einer Gesamtbeschleunigung a, umfassend eine Längsbeschleunigungskomponente ax und eine Querbeschleunigungskomponente ay definiert. In dem GG-Diagramm sind die jeweiligen Maximalwerte der Gesamtbeschleunigung a'*, a"*, a'"* eingetragen, welche bei einem Befahren der jeweiligen Rückführtrajektorien 1', 1", 1'" erreicht, aber nicht übertreten, werden. Die Fahrassistenzvorrichtung 5 kann aus der Schar der Rückführtrajektorien 1 geeignete Rückführtrajektorien 1* auswählen. Dabei müssen die geeigneten Rückführtrajektorien 1* zumindest eine vorbestimmte Randbedingung erfüllen. Es kann sein, dass eine Rückführtrajektorie 1"' einen örtlichen Bereich, wobei es sich um die Fahrbahn handeln kann verlässt und deshalb nicht von der Fahrassistenzvorrichtung 5 als geeignete Rückführtrajektorie 1* ausgewählt wird. Eine mögliche Rückführtrajektorie 1 kann den zulässigen Wertebereich der Gesamtbeschleunigung a verlassen und aus diesem Grund nicht von der Fahrassistenzvorrichtung 5 als geeignete Rückführtrajektorie 1* ausgewählt werden. Eine Rückführtrajektorie 1' kann innerhalb der Fahrbahn verlaufen und innerhalb des zulässigen Wertebereichs der Gesamtbeschleunigung a verbleiben und somit alle Randbedingungen erfüllen. Aus diesem Grund wird diese Rückführtrajektorie 1' als ausgewählte geeignete Rückführtrajektorie 1** gewählt und die Fahrassistenzvorrichtung 5 greift in Abhängigkeit von dem Autonomiegrad 7 des Fahrdynamikprofils 6' dieser Rückführtrajektorie 1' ein.

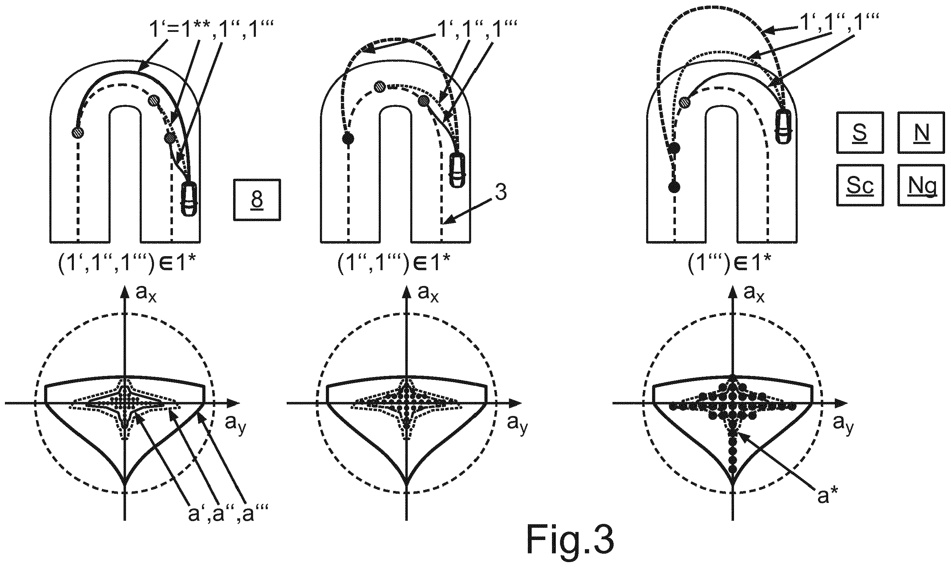

Fig. 3 zeigt die stufenweise Ermittlung ausgewählten geeigneten Rückführtrajektorie 1**. Die Figur zeigt den Verlauf von drei berechneten Rückführtrajektorien 1', 1", 1"' unter unterschiedlichen Anfangsbedingungen 4. Darunter befindet sich jeweils ein GG-Profil, welches die zulässigen Wertebereiche der Gesamtbeschleunigung a', a", a'" der drei Fahrdynamikprofile 6', 6", 6'" der Rückführtrajektorien 1', 1", 1"' und den zum Befahren der Kurve erforderlichen Wertebereich a* umfasst. Die erste Rückführtrajektorie 1' basiert auf der Fahrdynamik des Fahrers. Der zugeordnete Autonomiegrad 7 sieht kein Eingreifen der Fahrassistenzvorrichtung 5 bei einem Befahren der Rückführtrajektorie 1' vor. Die zweite Rückführtrajektorie 1" basiert auf einem Fahrdynamikprofil 6", welches einen defensiven Fahrstil beschreibt. Der zugeordnete Autonomiegrad 7 sieht einen Eingriff in die Längsführung durch die Fahrassistenzvorrichtung 5 vor. Die dritte Rückführtrajektorie 1'" basiert auf einem Fahrdynamikprofil 6'" mit einem dynamischen Fahrstil. Dabei sieht der zugeordnete Autonomiegrad 7 eine autonome Führung des Kraftfahrzeugs 2 durch die Fahrassistenzvorrichtung 5 vor. In der ersten Anfangsbedingung 4 kann die Kurve mit einer Gesamtbeschleunigung a* befahren werden, welche keinen der Wertebereiche a', a", a'" der drei Fahrdynamikprofile 6', 6", 6'" verlässt. Somit sind alle drei Rückführtrajektorien 1', 1", 1"' zum Durchfahren der Kurve geeignet. Die Fahrassistenzvorrichtung 5 ermittelt in diesem Fall die erste Rückführtrajektorie 1' als ausgewählte geeignete Rückführtrajektorie 1** zum Rückführen des Kraftfahrzeugs 2 auf die Solltrajektorie 3, weil deren Fahrdynamikprofil 6' der minimale Autonomiegrad 7 zugeordnet ist. Es kann sein, dass die Fahrassistenzvorrichtung 5 Warnsignale 8 an den Fahrer ausgibt, damit er das Kraftfahrzeug entlang der ausgewählten geeigneten Rückführtrajektorie 1** steuern kann. Bei der zweiten Anfangsbedingung 4 verläuft die erste Rückführtrajektorie 1' außerhalb der Fahrbahn und erfüllt somit eine Randbedingung nicht, weil sie eine örtliche Beschränkung nicht einhält. Aus diesem Grund ist sie keine geeignete Rückführtrajektorie 1*. Zudem überschreitet der zum Befahren der Kurve notwendige Wertebereich a* der Gesamtbeschleunigung den zulässigen Wertebereich a' der ersten Rückführtrajektorie 1'. Aus diesem Grund sind nur die Rückführtrajektorien 1", 1'" geeignete Rückführtrajektorien 1*. Da dem Fahrdynamikprofil 6" der zweiten Rückführtrajektorie 1" ein geringerer Wert als der dritten Rückführtrajektorie 1'" zugeordnet ist, wird die zweite Rückführtrajektorie 1'" als ausgewählte geeignete Rückführtrajektorie 1** ausgewählt. Bei der dritten Anfangsbedingung 4 erfüllt lediglich die dritte Rückführtrajektorie 1'" die Randbedingungen. Aus diesem Grund wird die Fahrassistenzvorrichtung 5 das Kraftfahrzeug 2 autonom entlang der dritten Rückführtrajektorie 1'" steuern. Es kann auch sein, dass die dritte Rückführtrajektorie 1'" als ausgewählte geeignete Rückführtrajektorie 1** ausgewählt wird, weil nur eine geeignete Rückführtrajektorie 1* drei berechneten Rückführtrajektorien gegenübersteht und somit ein vorbestimmter Sicherheitswert Sc=0.5 durch S=Ng/N=1/3 unterschritten wird.

Insgesamt zeigt das Beispiel, wie durch die Erfindung eine vorausschauende stufenweise Fahrassistenzvorrichtung bereitgestellt wird.

### Bezugszeichenliste

- 1: Mögliche Rückführtrajektorien
- 2: Kraftfahrzeugs
- 3: Solltrajektorie
- 4: Anfangsbedingung
- 5: Fahrassistenzvorrichtung
- 6: Fahrdynamikprofile
- 7: Autonomiegrad
- 8: Warnsignale
- a: Gesamtbeschleunigung
- ax: Längsbeschleunigungskomponente
- ay: Querbeschleunigungskomponente
- vmax: maximale Geschwindigkeit vmax
- d: Abweichung
- s: Längsrichtung
- 1', 1", 1'": Rückführtrajektorien
- 6', 6", 6'": Fahrdynamikprofile
- a', a", a'": höchste erreichte Gesamtbeschleunigung
- 1*: Geeignete Rückführtrajektorien
- 1**: ausgewählte geeignete Rückführtrajektorie
- a*: notwendige Gesamtbeschleunigung
- S: Sicherheitswert
- Sc: Vorbestimmter Sicherheitswert
- Ng: Zahl der geeigneten Rückführtrajektorien
- N: Anzahl der berechneten Rückführtrajektorien

## Patentansprüche

1. Fahrassistenzvorrichtung (5) eingerichtet zur teilautonomen und vollautonomen Führung eines Kraftfahrzeugs (2), **dadurch gekennzeichnet, dass** die Fahrassistenzvorrichtung (5) dazu eingerichtet ist,
a. mögliche Rückführtrajektorien (1) zum jeweiligen Rückführen eines Kraftfahrzeugs von einer Anfangsbedingung (4), welche von einer vorgegebenen Solltrajektorie (3) abweicht, auf die Solltrajektorie (3) zu berechnen, wobei jede Rückführtrajektorie (1) ein jeweiliges vorbestimmtes Fahrdynamikprofil (6) erfüllt, welches jeweils einen zulässigen Wertebereich einer Gesamtbeschleunigung (a), umfassend eine Längsbeschleunigungskomponente (ax) und eine Querbeschleunigungskomponente (ay), vorgibt und welchem ein jeweiliger Autonomiegrad (7) zugeordnet ist,
b. Rückführtrajektorien (1), welche ein Auswahlkriterium mit zumindest einer vorbestimmten Randbedingung erfüllen, jeweils als geeignete Rückführtrajektorien (1*) zu ermitteln,
c. aus den geeigneten Rückführtrajektorien (1*), diejenige Rückführtrajektorie (1**) auszuwählen, deren Fahrdynamikprofil (6) einen minimalen Autonomiegrad (7) aufweist, und
d. in Abhängigkeit von dem Autonomiegrad (7) des Fahrdynamikprofils (6) der ausgewählten geeigneten Rückführtrajektorie (1**) zur Umsetzung dieser Rückführtrajektorie (1**) in die Führung des Kraftfahrzeugs (2) einzugreifen.

2. Fahrassistenzvorrichtung (5) nach Anspruch 1, **dadurch gekennzeichnet, dass** die Fahrassistenzvorrichtung (5) dazu eingerichtet ist, in Abhängigkeit von dem Autonomiegrad (7) der ausgewählten geeigneten Rückführtrajektorie (1**) das Eingreifen gemäß einer der folgenden Arten durchzuführen: Die Führung des Kraftfahrzeugs (2) erfolgt:
a. nur durch einen Fahrer,
b. teilautonom durch den Fahrer und die Fahrassistenzvorrichtung (5),
c. autonom durch die Fahrassistenzvorrichtung (5).

3. Fahrassistenzvorrichtung (5) nach einem der vorhergehenden Ansprüche, **dadurch gekennzeichnet, dass** die Fahrassistenzvorrichtung (5) dazu eingerichtet ist, zumindest ein optisches und/oder haptisches und/oder akustisches Warnsignal (8) betreffend eine Querführung und/oder eine Längsführung gemäß der ausgewählten geeigneten Rückführtrajektorie (1**) auszugeben.

4. Fahrassistenzvorrichtung (5) nach einem der vorhergehenden Ansprüche, **dadurch gekennzeichnet, dass** das jeweilige Fahrdynamikprofil (6) eine maximale Längsgeschwindigkeit (vmax) umfasst.

5. Fahrassistenzvorrichtung (5) nach einem der vorhergehenden Ansprüche, **dadurch gekennzeichnet, dass** die zumindest eine vorbestimmte Randbedingung des Auswahlkriteriums eine Einhaltung einer örtlichen Beschränkung umfasst.

6. Fahrassistenzvorrichtung (5) nach einem der vorhergehenden Ansprüche, **dadurch gekennzeichnet, dass** die Fahrassistenzvorrichtung (5) dazu eingerichtet ist, nach dem Ermitteln der geeigneten Rückführtrajektorien (1*) einen Sicherheitswert (S) zu berechnen, welcher ein Verhältnis der Anzahl der möglichen Rückführtrajektorien (N) zu der Anzahl der geeigneten Rückführtrajektorien (Ng) beschreibt, und nur aus den geeigneten Rückführtrajektorien (1*), diejenige Rückführtrajektorie (1**) auszuwählen, deren Fahrdynamikprofil (6) den minimalen Autonomiegrad (7) aufweist, wenn der Sicherheitswert (S) größer ist als ein vorbestimmter Grenzsicherheitswert (Sc).

7. Fahrassistenzvorrichtung (5) nach einem der vorhergehenden Ansprüche, **dadurch gekennzeichnet, dass** die zulässige Gesamtbeschleunigung (a) in dem jeweiligen Fahrdynamikprofil (6) mittels eines GG-Profils definiert ist.

8. Verfahren zum Betreiben einer Fahrassistenzvorrichtung (5), **dadurch gekennzeichnet, dass** durch die Fahrassistenzvorrichtung (5),
a. mögliche Rückführtrajektorien (1) zum jeweiligen Rückführen eines Kraftfahrzeugs von einer Anfangsbedingung (4), welche von einer vorgegebenen Solltrajektorie (3) abweicht, auf die Solltrajektorie (3) berechnet werden, wobei jede Rückführtrajektorie (1) ein jeweiliges vorbestimmtes Fahrdynamikprofil (6) erfüllt, welches jeweils einen zulässigen Wertebereich einer Gesamtbeschleunigung (a), umfassend eine Längsbeschleunigungskomponente (ax) und eine Querbeschleunigungskomponente (ay), vorgibt und welchem ein jeweiliger Autonomiegrad (7) zugeordnet ist,
b. Rückführtrajektorien (1), welche ein Auswahlkriterium mit zumindest einer vorbestimmten Randbedingung erfüllen, jeweils als geeignete Rückführtrajektorien (1*) ermittelt werden,
c. aus den geeigneten Rückführtrajektorien (1*), diejenige Rückführtrajektorie (1**) ausgewählt wird, deren Fahrdynamikprofil (6) zumindest einen minimalen Autonomiegrad (7) aufweist, und
d. in Abhängigkeit von dem Autonomiegrad (7) des Fahrdynamikprofils (6) der ausgewählten geeigneten Rückführtrajektorie (1**) zur Umsetzung dieser Rückführtrajektorie (1**) in die Führung des Kraftfahrzeugs (2) eingegriffen wird.

9. Kraftfahrzeug (2) mit einer Fahrassistenzvorrichtung (5) nach einem der Ansprüche 1 bis 7.
